# EUROPÄISCHE PATENTSCHRIFT

(11) **EP 4 153 905 B1**
(45) Veröffentlichungstag und Bekanntmachung des Hinweises auf die Patenterteilung: **02.10.2024**
(21) Anmeldenummer: 21723651.2
(22) Anmeldetag: 27.04.2021
(51) Int. Cl.: F21V 8/00, F21S 4/28, F21V 5/08, F21V 7/00, F21V 17/16, F21Y 103/10, F21Y 115/10

(54) **ASYMMETRISCHE LINEARLINSE UND ZUGEHÖRIGE LINEARLEUCHTE**
AYSYMMETRICAL LINEAR LENS AND ASSOCIATED LINEAR LUMINAIRE
LENTILLE LINÉAIRE ASYMÉTRIQUE ET DISPOSITIF D'ÉCLAIRAGE LINÉAIRE Y RELATIF

(30) Priorität: 18.05.2020 DE 202020102825 U
(43) Veröffentlichungstag der Anmeldung: 29.03.2023
(73) Patentinhaber: Nimbus Group GmbH, 70469 Stuttgart (DE)
(72) Erfinder: GSTREIN, Manfred, 6067 Absam (AT); FRISCHMANN, Florian, 6460 Imst (AT)
(74) Vertreter: Kohler Schmid Möbus Patentanwälte
(86) Internationale Anmeldenummer: PCT/EP2021/061020
(87) Internationale Veröffentlichungsnummer: WO 2021/233650

(56) Entgegenhaltungen:
- EP-A1- 3 260 768
- DE-A1- 102016 225 199
- DE-A1- 102017 125 212

## Beschreibung

Die Erfindung betrifft eine asymmetrische Linearlinse in Form eines einstückigen, transparenten Kunststoff-Vollprofils zum Richten von Licht in einen begrenzten Raumwinkel sowie auch eine Linearleuchte mit einer solchen Linearlinse.

Eine derartige asymmetrische Linearlinse ist beispielsweise durch die DE 10 2017 125212 A1 bekannt geworden. Diese bekannte asymmetrische Linearlinse umfasst eine Eintrittsseite, über die im Betrieb Licht in die Linse eingekoppelt wird, und eine Austrittseite, über die im Betrieb Licht aus der Linse ausgekoppelt wird. Die Linse umfasst an der Austrittsseite mehrere gegeneinander gekippte Austrittsflächen. Die Eintrittsseite ist in einen ersten Abschnitt und in einen zweiten Abschnitt unterteilt. Die Linse umfasst an der Eintrittsseite im ersten Abschnitt alternierend angeordnete erste Eintrittsflächen und zu diesen gekippte Reflexionsflächen, wobei in Richtung weg von dem zweiten Abschnitt jeder ersten Eintrittsfläche eine Reflexionsfläche nachgeordnet ist. Eine Lichtquelle ist so bezüglich der Linse anordenbar, dass beim Betrieb der Lichtquelle über jede erste Eintrittsfläche Licht aus der Lichtquelle in die Linse eintritt, anschließend an der unmittelbar nachgeordneten Reflexionsfläche größtenteils totalreflektiert wird und daraufhin über eine oder mehrere Austrittsflächen aus der Linse austritt.

Aus DE 10 2016 225199 A1 ist weiter eine Linearleuchte mit einem U-förmigen Profil, mit einem innenseitig am Profilboden des U-förmigen Profils angeordneten LED-Leuchtband und mit einer dem Leuchtband vorgeordneten, asymmetrischen Linearlinse bekannt. Die Linearlinse weist eine Einkoppelfläche zum Einkoppeln des vom Leuchtband abgestrahlten Lichts und eine Auskoppelfläche zum Auskoppeln des eingekoppelten Lichts auf, wobei die Ein- und Auskoppelflächen parallel zueinander verlaufen und die Profilbreite der Linearlinse an der Auskoppelfläche größer als an der Einkoppelfläche ist.

Aus der EP 2 421 414 B1 ist eine asymmetrische Linse in Form eines einstückigen, transparenten Kunststoff-Vollprofils zum Richten von Licht in einen begrenzten Raumwinkel bekannt. Die Außenseite des Vollprofils weist zwei jeweils vom Profilrand zur Profilmitte hin ansteigende Profilkonturen auf, wobei in der Profilmitte die eine Profilkontur gegenüber der anderen Profilkontur zurückversetzt ist.

EP 3 260 768 A1 offenbart schließlich eine LED-Beleuchtungsleiste mit einer Aufnahmekammer und eine LED-Beleuchtungsleiste. Die LED-Beleuchtungsleiste umfasst ein Stabgehäuse, mehrere LED-Chips und eine Linsensäule. Die Linsensäule umfasst eine erste lichtemittierende Oberfläche in Form einer Kondensorlinse, die sich mit der optischen Linsenachse schneidet, und eine zweite lichtemittierende Oberfläche. Die zweite lichtemittierende Oberfläche enthält eine konvexe Linse und eine ebene Oberfläche, die zwischen der ersten lichtemittierenden Oberfläche und der konvexen Linse angeordnet ist. Im Querschnitt senkrecht zur axialen Richtung des Stangengehäuses ist ein Winkel zwischen der Linsenachse und einer Montagebezugslinie der Aufnahmekammer ein spitzer Winkel.

Demgegenüber ist es die Aufgabe der vorliegenden Erfindung, eine alternative asymmetrische Linearlinse anzugeben. Insbesondere soll die Linearlinse eingekoppeltes Licht auf der einen Profilseite unter einem seitlichen Austrittwinkel von bis zu ca. 35° und auf der anderen Profilsseite unter einem seitlichen Austrittwinkel von zu bis ca. 80° bis 85° auskoppeln.

Diese Aufgabe wird erfindungsgemäß gelöst durch eine asymmetrische Linearlinse in Form eines einstückigen, transparenten Kunststoff-Vollprofils zum Richten von Licht in einen begrenzten Raumwinkel, mit einem ersten Vollprofilabschnitt in Form eines rechtwinkligen Trapezes mit einer kürzen und einer längeren Grundseite und mit zwei Seitenschenkeln, und mit einem zweiten Vollprofilabschnitt in Form eines nicht-rechtwinkligen Trapezes mit einer kürzen und einer längeren Grundseite und mit zwei Seitenschenkeln, wobei die längere Grundseite des ersten Vollprofilabschnitts und die kürzere Grundseite des zweiten Vollprofilabschnitts miteinander zusammenfallen, wobei einer der beiden Seitenschenkel des ersten Vollprofilabschnitts und einer der beiden Seitenschenkel des zweiten Vollprofilabschnitts auf einer geraden Linie liegen, die mit der längeren Grundseite des zweiten Vollprofilabschnitts einen ersten Winkel im Bereich zwischen 40° und 50° einschließt, und wobei der andere Seitenschenkel des zweiten Vollprofilabschnitts gegenüber dem anderen Seitenschenkel des ersten Vollprofilabschnitts um einen zweiten Winkel im Bereich zwischen 25° und 35° nach außen abgewinkelt ist.

Vorzugsweise liegt der erste Winkel im Bereich zwischen 43° und 47° und beträgt insbesondere 45°. Vorzugsweise liegt der zweite Winkel im Bereich zwischen 28° und 32° liegt und beträgt insbesondere 30°.

Von den beiden Seitenschenkeln des zweiten Vollprofilabschnitts kann jeweils ein Profilraststeg in Richtung rechtwinklig zu der längeren Grundseite des zweiten Vollprofilabschnitts fort von dieser Grundfläche absteht.

Die Erfindung betrifft auch eine Linearleuchte mit einem U-förmigen Profil mit einem innenseitig am Profilboden des U-förmigen Profils außermittig angeordneten Leuchtband, insbesondere LED-Band, und mit einer dem Leuchtband vorgeordneten, wie oben ausgebildeten, asymmetrischen Linearlinse, die eine Einkoppelfläche zum Einkoppeln des vom Leuchtband abgestrahlten Lichts und eine Auskoppelfläche zum Auskoppeln des eingekoppelten Lichts aufweist, wobei die Ein- und Auskoppelflächen parallel zueinander verlaufen und die Profilbreite der Linearlinse an der Auskoppelfläche größer als an der Einkoppelfläche ist.

Verglichen mit einem LED-Band ohne vorgeordnete Linearlinse kann bei der erfindungsgemäßen Linearleuchte die Beleuchtungsstärke (in Ix) deutlich (um bis zu 100%) im erwünschten Funktionsbereich erhöht und die Blendung deutlich (um bis zu 85%) im unerwünschten Bereich reduziert werden. Die erfindungsgemäße Linearleuchte ist für Unterbau oder für flächenbündiges Einlassen geeignet und kann beispielsweise als Arbeitsflächenbeleuchtung in Küchen und Laboren oder als Schrank-Innenbeleuchtung eingesetzt werden.

Die Linearlinse verschließt vorzugsweise die offene Seite des U-förmigen Profils und ist darin eingesteckt und verrastet.

Bei einer bevorzugten Ausführungsform der Erfindung weist der Profilboden innenseitig eine Bodennut auf, in die das Leuchtband eingelegt und daran befestigt ist. Für den Fall, dass die Bodennut breiter als das verwendete Leuchtband ist, können die Nutflanken der Bodennut entweder als Links- oder Rechtanschlag für das eingelegte Leuchtband dienen.

Weitere Vorteile der Erfindung ergeben sich aus der Beschreibung, den Ansprüchen und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: den Profilquerschnitt einer erfindungsgemäßen Linearlinse;
- Fig. 2: eine Linearleuchte mit der erfindungsgemäßen Linearlinse und schematisch den zugehörigen Strahlengang durch die Linearlinse; und
- Fig. 3: einen Schrank mit zwei Linearleuchten zur Innenbeleuchtung und einen Küchenoberschrank mit einer Linearleuchte zur Arbeitsflächenbeleuchtung.

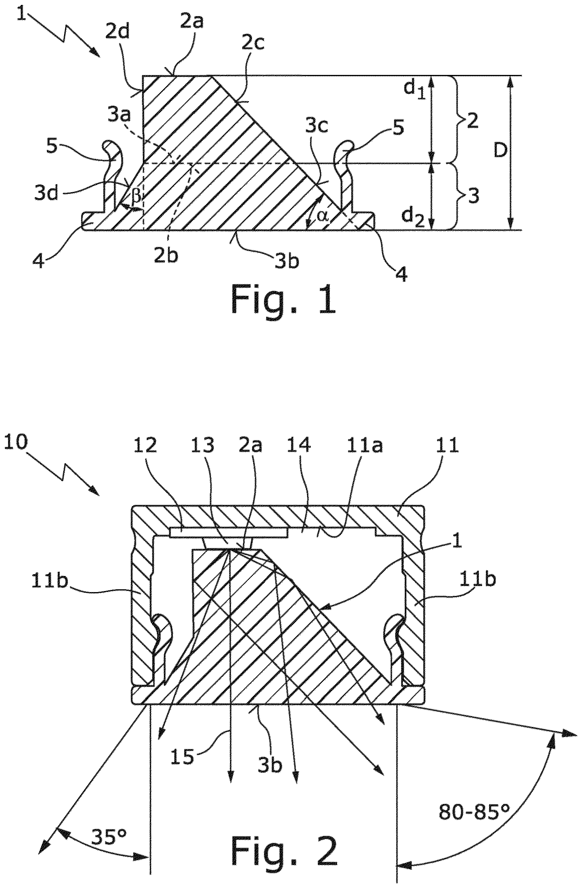

Die in **Fig. 1** gezeigte asymmetrische Linearlinse 1 dient zum Richten von Licht in einen begrenzten Raumwinkel und ist als ein einstückiges, für sichtbares Licht transparentes Kunststoff-Vollprofil ausgebildet.

Die Linearlinse 1 umfasst einen ersten Vollprofilabschnitt **2** in Form eines rechtwinkligen Trapezes mit einer kürzen und einer (virtuellen) längeren Grundseite **2a, 2b** und mit zwei Seitenschenkeln **2c, 2d** und mit einem zweiten Vollprofilabschnitt **3** in Form eines nicht-rechtwinkligen Trapezes mit einer (virtuellen) kürzen und einer längeren Grundseite **3a, 3b** und mit zwei Seitenschenkeln **3c, 3d.** Die längere Grundseite 2b des ersten Vollprofilabschnitts 2 und die kürzere Grundseite 3a des zweiten Vollprofilabschnitts 3 fallen miteinander zusammen, d.h., die längere Grundseite 2b des ersten Vollprofilabschnitts 2 und die kürzere Grundseite 3a des zweiten Vollprofilabschnitts 3 sind durch die gleiche virtuelle Linie gebildet. Die kürzere Grundseite 2a des ersten Vollprofilabschnitts 2 und die längere Grundseite 3b des zweiten Vollprofilabschnitts 3 verlaufen parallel zueinander. Die Dicke **d1** des ersten Vollprofilabschnitts 2 ist bevorzugt ca. 1,25-mal größer als die Dicke **d2** des ersten Vollprofilabschnitts 3. In einem bevorzugten Ausführungsbeispiel beträgt d1 4,4 mm und d2 5,6 mm, also die Gesamtdicke **D** 10 mm, und die Breite der kürzeren Grundseite 2a beträgt 19 mm.

Der Seitenschenkel 2c des ersten Vollprofilabschnitts 2 und der Seitenschenkel 3c des zweiten Vollprofilabschnitts 3 liegen auf einer geraden Linie, die mit der längeren Grundseite 3b des zweiten Vollprofilabschnitts 2 einen ersten Winkel **α** von bevorzugt ca. 45° einschließt. Der andere Seitenschenkel 3d des zweiten Vollprofilabschnitts 3 ist gegenüber dem anderen Seitenschenkel 2d des ersten Vollprofilabschnitts 2 um einen zweiten Winkel **ß** von ca. 30° nach außen abgewinkelt. Der zweite Vollprofilabschnitt 3 ist in den beiden Eckbereichen, die durch die längeren Grundseite 3b und die jeweiligen Seitenschenkel 3c, 3d gebildet ist, mit seitlichen, plattenförmigen Ansätzen **4** versehen, von denen jeweils ein Profilraststeg **5** in Richtung rechtwinklig zu der längeren Grundseite 3b des zweiten Vollprofilabschnitts 3 in Richtung fort von dieser längeren Grundseite 3b absteht.

Die in **Fig. 2** gezeigte Linearleuchte **10** umfasst ein U-förmiges Profil **11** aus z.B. Metall (bevorzugt Aluminium), ein innenseitig am Profilboden **11a** des U-förmigen Profils 11 außermittig angeordnetes Leuchtband in Form eines LED-Bandes **12** (z.B. 5 mm oder 8 mm breit) mit mehreren in Bandlängsrichtung beabstandeten LEDs **13,** sowie eine dem LED-Band 12 vorgeordnete Linearlinse 1. Der Profilboden 11 weist innenseitig eine Bodennut **14** auf, in die das LED-Band 12 eingelegt und angeklebt ist. Wenn, wie gezeigt, die Bodennut 14 breiter als das LED-Band 12 ist, dienen die beiden Nutflanken der Bodennut 14 als Links- oder Rechtanschlag für das eingelegte LED-Band 12.

Die Linearlinse 1 ist mit ihren beidseitigen Profilraststegen 5 in die offene Seite des U-förmigen Profils 11 eingesteckt und mit den beiden Profilschenkeln **11b** des U-förmigen Profils 11 verrastet, wodurch die offene Seite des U-förmigen Profils 11 verschlossen ist.

Die kürzere Grundseite 2a des ersten Vollprofilabschnitts 2 bildet eine Einkoppelfläche zum Einkoppeln des vom LED-Band 12 abgestrahlten Lichts **15,** und die längere Grundseite 3b des zweiten Vollprofilabschnitts 3 bildet eine Auskoppelfläche zum Auskoppeln des eingekoppelten Lichts 15, wobei die Ein- und Auskoppelflächen 2a, 3b parallel zueinander verlaufen. Das eingekoppelte Licht 15 tritt entweder aus der Auskoppelfläche 3b aus, ohne an den Seitenschenkeln 2c, 2d, 3c, 3d der beiden Vollprofilabschnitte 2, 3 reflektiert worden zu sein, oder aber nach Totalreflexion an den Seitenschenkeln 2, 2d, 3c, 3d aus. Auf der in Fig. 2 linken Profilseite tritt das Licht 15 unter einem seitlichen Austrittwinkel von bis zu ca. 35° und auf der in Fig. 2 rechten Profilseite unter einem seitlichen Austrittwinkel von zu bis ca. 80° bis 85° aus, so dass insgesamt in einen Gesamtabstrahlwinkel von 115° bis 120° abgestrahlt wird. Der Transmissionsgrad der Linearlinse 1 für das abgestrahlte, sichtbare Licht liegt idealerweise bei mindestens ca. 90%.

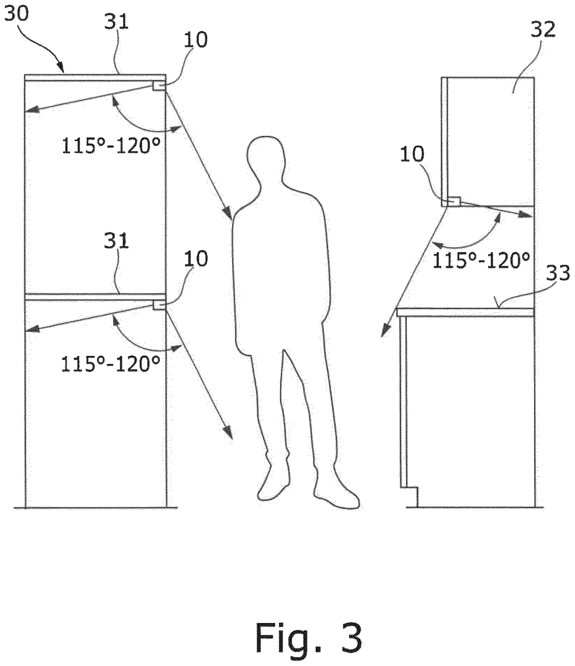

**Fig. 3** zeigt einen Schrank **30** mit zwei jeweils an einem Ober- bzw. Zwischenboden **31** unterseitig befestigten Linearleuchten 10 zur Schrank-Innenbeleuchtung sowie einen Oberschrank **32** mit einer unterseitig befestigten Linearleuchte 10 zur Beleuchtung einer unter dem Oberschrank 32 angeordneten Arbeitsfläche **33.** Die Linearleuchten 10 sind jeweils frontseitig am Ober- bzw. Zwischenboden 31 oder am Oberschrank 32 angeordnet, bevorzugt daran unterseitig angebaut oder darin flächenbündig eingelassen, und strahlen unter einem Austrittwinkel von bis zu ca. 35° nach vorne und unter einem Austrittwinkel von zu bis ca. 80° bis 85° nach hinten. Verglichen mit einem LED-Band 12 ohne vorgeordnete Linearlinse ist die Beleuchtungsstärke (in lx) um 100% im erwünschten Funktionsbereich erhöht und die Blendung um 85% im unerwünschten Bereich reduziert.

## Patentansprüche

1. Asymmetrische Linearlinse (1) in Form eines einstückigen, transparenten Kunststoff-Vollprofils zum Richten von Licht in einen begrenzten Raumwinkel,
**gekennzeichnet durch** einen ersten Vollprofilabschnitt (2) in Form eines rechtwinkligen Trapezes mit einer kürzen und einer längeren Grundseite (2a, 2b) und mit zwei Seitenschenkeln (2c, 2d), und einen zweiten Vollprofilabschnitt (3) in Form eines nicht-rechtwinkligen Trapezes mit einer kürzen und einer längeren Grundseite (3a, 3b) und mit zwei Seitenschenkeln (3c, 3d), wobei die längere Grundseite (2b) des ersten Vollprofilabschnitts (2) und die kürzere Grundseite (3a) des zweiten Vollprofilabschnitts (3) miteinander zusammenfallen, wobei einer (2c) der beiden Seitenschenkel des ersten Vollprofilabschnitts (2) und einer (3c) der beiden Seitenschenkel des zweiten Vollprofilabschnitts (3) auf einer geraden Linie liegen, die mit der längeren Grundseite (3b) des zweiten Vollprofilabschnitts (2) einen ersten Winkel (α) im Bereich zwischen 40° und 50° einschließt, und wobei der andere Seitenschenkel (3d) des zweiten Vollprofilabschnitts (3) gegenüber dem anderen Seitenschenkel (2d) des ersten Vollprofilabschnitts (2) um einen zweiten Winkel (β) im Bereich zwischen 25° und 35° nach außen abgewinkelt ist.

2. Asymmetrische Linearlinse nach Anspruch 1, **dadurch gekennzeichnet, dass** der erste Winkel (α) im Bereich zwischen 43° und 47° liegt und insbesondere 45° beträgt.

3. Asymmetrische Linearlinse nach Anspruch 1 oder 2, **dadurch gekennzeichnet, dass** der zweite Winkel (β) im Bereich zwischen 28° und 32° liegt und insbesondere 30° beträgt.

4. Asymmetrische Linearlinse nach einem der vorhergehenden Ansprüche, **dadurch gekennzeichnet, dass** von den beiden Seitenschenkeln (3c, 3d) des zweiten Vollprofilabschnitts (3) jeweils ein Profilraststeg (5) des einstückigen Kunststoff-Vollprofils in Richtung rechtwinklig zu der längeren Grundseite (3b) des zweiten Vollprofilabschnitts (3) fort von dieser Grundfläche (3b) absteht.

5. Asymmetrische Linearlinse nach einem der vorhergehenden Ansprüche, **dadurch gekennzeichnet, dass** der zweite Vollprofilabschnitt (3) in den beiden Eckbereichen der längeren Grundseite (3b) und der beiden Seitenschenkel (3c, 3d) seitliche Ansätze (4) aufweist.

6. Linearleuchte (10) mit einem U-förmigen Profil (11), mit einem innenseitig am Profilboden (11a) des U-förmigen Profils (11) außermittig angeordneten Leuchtband (12), insbesondere LED-Band, und mit einer dem Leuchtband (12) vorgeordneten, asymmetrischen Linearlinse (1) nach einem der vorhergehenden Ansprüche, die eine Einkoppelfläche (2a) zum Einkoppeln des vom Leuchtband (12) abgestrahlten Lichts (15) und eine Auskoppelfläche (3b) zum Auskoppeln des eingekoppelten Lichts (15) aufweist, wobei die Ein- und Auskoppelflächen (2a, 3b) parallel zueinander verlaufen und die Profilbreite der Linearlinse (1) an der Auskoppelfläche (3b) größer als an der Einkoppelfläche (2a) ist.

7. Linearleuchte nach Anspruch 6, **dadurch gekennzeichnet, dass** die asymmetrische Linearlinse (1) die offene Seite des U-förmigen Profils (11) verschließt.

8. Linearleuchte nach Anspruch 6 oder 7, **dadurch gekennzeichnet, dass** die asymmetrische Linearlinse (1) in die offene Seite des U-förmigen Profils (11) eingesteckt und mit dem U-förmigen Profil (11) verrastet ist.

9. Linearleuchte nach einem der Ansprüche 6 bis 8, **dadurch gekennzeichnet, dass** der Profilboden (11a) innenseitig eine Bodennut (14) aufweist, in die das Leuchtband (12) eingelegt und daran befestigt ist.

10. Linearleuchte nach Anspruch 9, **dadurch gekennzeichnet, dass** die Bodennut (14) breiter als das Leuchtband (12) ist und die Nutflanken der Bodennut (14) entweder einen Links- oder Rechtanschlag für das eingelegte Leuchtband (12) ausbilden.

## Claims

1. An asymmetrical linear lens (1) in the form of an integral transparent plastic solid profile for directing light at a limited solid angle,
**characterized by** a first solid profile section (2) in the form of a right trapezoid having a short and a longer base side (2a, 2b) and having two side legs (2c, 2d), and a second solid profile section (3) in the form of a non-right trapezoid having a short and a longer base side (3a, 3b) and having two side legs (3c, 3d), wherein the longer base side (2b) of the first solid profile section (2) and the shorter base side (3a) of the second solid profile section (3) coincide with one another, wherein one (2c) of the two side legs of the first solid profile section (2) and one (3c) of the two side legs of the second solid profile section (3) lie on a straight line which encloses a first angle (α) in the range between 40° and 50° with the longer base side (3b) of the second solid profile section (2), and wherein the other side leg (3d) of the second solid profile section (3) is angled outward in relation to the other side leg (2d) of the first solid profile section (2) by a second angle (ß) in the range between 25° and 35°.

2. The asymmetrical linear lens as claimed in claim 1, **characterized in that** the first angle (α) is in the range between 43° and 47° and is in particular 45°.

3. The asymmetrical linear lens as claimed in claim 1 or 2, **characterized in that** the second angle (ß) is in the range between 28° and 32° and is in particular 30°.

4. The asymmetrical linear lens as claimed in any one of the preceding claims, **characterized in that** a profile detent web (5) of the integral plastic solid profile protrudes from each of the two side legs (3c, 3d) of the second solid profile section (3) in the direction perpendicular to the longer base side (3b) of the second solid profile section (3) away from this base side (3b).

5. The asymmetrical linear lens as claimed in any one of the preceding claims, **characterized in that** the second solid profile section (3) has lateral attachments (4) in the two corner regions of the longer base side (3b) and the two side legs (3c, 3d).

6. A linear luminaire (10) comprising a U-shaped profile (11), a luminous band (12) arranged off-center on the inside on the profile bottom (11a) of the U-shaped profile (11), in particular an LED band, and an asymmetrical linear lens (1) arranged in front of the luminous band (12) as claimed in any one of the preceding claims, which has a coupling surface (2a) for coupling in the light (15) emitted by the luminous band (12) and a decoupling surface (3b) for decoupling the coupled-in light (15), wherein the coupling and decoupling surfaces (2a, 3b) extend in parallel to one another and the profile width of the linear lens (1) is greater at the decoupling surface (3b) than at the coupling surface (2a).

7. The linear luminaire as claimed in claim 6, **characterized in that** the asymmetrical linear lens (1) closes the open side of the U-shaped profile (11).

8. The linear luminaire as claimed in claim 6 or 7, **characterized in that** the asymmetrical linear lens (1) is inserted into the open side of the U-shaped profile (11) and locked with the U-shaped profile (11).

9. The linear luminaire as claimed in any one of claims 6 to 8, **characterized in that** the profile bottom (11a) has a bottom groove (14) on the inside, in which the luminous band (12) is inserted and fastened thereon.

10. The linear luminaire as claimed in claim 9, **characterized in that** the bottom groove (14) is wider than the luminous band (12) and the groove flanks of the bottom groove (14) form either a left or right stop for the inserted luminous band (12).

## Revendications

1. Lentille linéaire asymétrique (1) se présentant sous la forme d'un profilé plein en plastique transparent réalisé d'un seul tenant et permettant de diriger la lumière selon un angle solide limité,
**caractérisée par** une première section de profilé plein (2) sous la forme d'un trapèze rectangle avec une petite base et une grande base (2a, 2b) et avec deux côtés (2c, 2d), et une seconde section de profilé plein (3) sous la forme d'un trapèze non rectangle avec une petite base et une grande base (3a, 3b) et avec deux côtés (3c, 3d), la grande base (2b) de la première section de profilé plein (2) et la petite base (3a) de la seconde section de profilé plein (3) coïncidant l'une avec l'autre, un côté (2c) parmi les deux côtés de la première section de profilé plein (2) et un côté (3c) parmi les deux côtés de la seconde section de profilé plein (3) étant situés sur une ligne droite qui forme avec la grande base (3b) de la seconde section de profilé plein (2) un premier angle (α) situé dans la plage comprise entre 40° et 50°, et l'autre côté (3d) de la seconde section de profilé plein (3) étant incliné vers l'extérieur selon un second angle (β) situé dans la plage comprise entre 25° et 35° par rapport à l'autre côté (2d) de la première section de profilé plein (2).

2. Lentille linéaire asymétrique selon la revendication 1, **caractérisée en ce que** le premier angle (α) se situe dans la plage comprise entre 43° et 47° et est en particulier de 45°.

3. Lentille linéaire asymétrique selon la revendication 1 ou 2, **caractérisée en ce que** le second angle (β) se situe dans la plage comprise entre 28° et 32° et est en particulier de 30°.

4. Lentille linéaire asymétrique selon l'une quelconque des revendications précédentes, **caractérisée en ce que** respectivement une nervure d'encliquetage de profilé (5) du profilé plein en matière plastique réalisé d'un seul tenant fait saillie à partir des deux côtés (3c, 3d) de la seconde section de profilé plein (3) dans une direction perpendiculaire à la grande base (3b) de la seconde section de profilé plein (3) en s'éloignant de ladite base (3b).

5. Lentille linéaire asymétrique selon l'une quelconque des revendications précédentes, **caractérisée en ce que** la seconde section de profilé plein (3) présente des appendices latéraux (4) dans les deux régions d'angle de la grande base (3b) et des deux côtés (3c, 3d).

6. Éclairage linéaire (10) avec un profilé en forme de U (11), avec une bande lumineuse (12), en particulier une bande LED, agencée de manière excentrée à l'intérieur au niveau du fond de profilé (11a) du profilé en forme de U (11), et avec une lentille linéaire asymétrique (1) selon l'une quelconque des revendications précédentes agencée devant la bande lumineuse (12) et présentant une surface d'injection (2a) permettant l'injection de la lumière (15) émise par la bande lumineuse (12) et une surface d'extraction (3b) permettant l'extraction de la lumière injectée (15), les surfaces d'injection et d'extraction (2a, 3b) étant parallèles l'une à l'autre et la largeur de profilé de la lentille linéaire (1) au niveau de la surface d'extraction (3b) étant supérieure à ce qu'elle est au niveau de la surface d'injection (2a).

7. Éclairage linéaire selon la revendication 6, **caractérisé en ce que** la lentille linéaire asymétrique (1) ferme le côté ouvert du profilé en forme de U (11).

8. Éclairage linéaire selon la revendication 6 ou 7, **caractérisé en ce que** la lentille linéaire asymétrique (1) est insérée dans le côté ouvert du profilé en forme de U (11) et est encliquetée avec le profilé en forme de U (11).

9. Éclairage linéaire selon l'une quelconque des revendications 6 à 8, **caractérisé en ce que** le fond de profilé (11a) présente à l'intérieur une rainure de fond (14) dans laquelle la bande lumineuse (12) est insérée et au niveau de laquelle elle est fixée.

10. Éclairage linéaire selon la revendication 9, **caractérisé en ce que** la rainure de fond (14) est plus large que la bande lumineuse (12) et les flancs de rainure de la rainure de fond (14) forment respectivement une butée gauche ou droite destinée à la bande lumineuse (12) insérée.
